# EUROPÄISCHE PATENTSCHRIFT

(11) **EP 2 242 400 B1**
(45) Veröffentlichungstag und Bekanntmachung des Hinweises auf die Patenterteilung: **22.05.2013**
(21) Anmeldenummer: 08715445.6
(22) Anmeldetag: 05.02.2008
(51) Int. Cl.: A47D 15/00, B62B 3/14, B62B 9/24

(54) **RÜCKHALTEVORRICHTUNG FÜR KINDER**
RESTRAINT DEVICE FOR CHILDREN
DISPOSITIF DE RETENUE POUR ENFANT

(43) Veröffentlichungstag der Anmeldung: 27.10.2010
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2008/000200
(87) Internationale Veröffentlichungsnummer: WO 2009/097828

(56) Entgegenhaltungen:
- WO-A-2007/016887
- DE-U1-202006 017 086
- US-A- 5 364 169

## Beschreibung

### Technisches Gebiet

Die Erfindung betrifft Rückhaltegurteinrichtungen für Kinder an Kinderwagen, Kindertrageschalen, Kinderstühlen oder Einkaufswagen

### Stand der Technik

Derartige Rückhaltegurteinrichtungen sind in verschiedensten Ausführungen bekannt.

Die US 5263726 zeigt einen Rückhaltegurt, der um den Bauch des Kindes und zwischen den Beinen des Kindes geführt wird, eine Lösung, die wenig ergonometrisch und wenig komfortabel ist.

Nachteilig bei diesem Rückhaltegurt ist zudem, dass der Gurt und die Schnallen des Gurtes bei Nichtgebrauch lose herumhängen und sich in beliebigen Teilen, in deren Nähe sie geraten verfangen können.

Hierdurch kann es nachteilig zu Einschränkungen des Gebrauchswertes führen, manchmal auch zu Schäden am Gurt oder Gurtschloss.

Bei Gurten, die an Einkaufswagen angebracht sind, können die lose herumhängenden Gurte auch die Bewegung der Korbklappe behindern und dadurch auch das Platz sparende Ineinanderschieben unmöglich machen.

Aus der US 3350136 ist eine Rückhaltevorrichtung bekannt, bei welchem in einem an der Rückenlehne des Kindersitzes befestigten Gehäuse ein Seil untergebracht ist und um den Oberkörper des Kindes geführt wird.

Dieses Seil ist über eine Rolle geführt und wird gegen den Widerstand einer Spiralfeder aus einem Gehäuse gezogen. Bei Nichtgebrauch wird das Seil von der der Kraft der Spiralfeder wieder zurück ins Gehäuse gezogen.

Bei diesem Rückhaltegurt nachteilig ist das wenig komfortable Seil, welches eher einschnürend wirkt als ein flächiger Gurt. Die Bauweise der Rückhaltevorrichtung hat zudem den konstruktiv bedingten Nachteil, dass bei der Verwendung eines breiten Gurtes die Rolle auch breiter sein muss und damit das Gehäuse ebenfalls entsprechend größere Ausmaße annehmen muss. Eine derartige Vorrichtung mit breitem Gurt hat dann ein Gehäuse mit einem störend großem Volumen, durch welches beim Ineinanderschieben der Einkaufswagen deutlich hinderlich ist: Das Volumen des Gehäuses stört die Schwenkbarkeit der Korbklappe und die Einkaufswagen sind nicht mehr so gut und platzsparend zu stapeln.

Ein weiterer Nachteil des aus der US 3350136 bekannten Gurtes ist die Tatsache, dass der Gurt, wenn er um das Kind gelegt wurde nicht fest fixiert ist, sondern nur von der Kraft der Spiralfeder gehalten wird.

Hierdurch ist es nachteilig möglich, dass ein Kind in einem unbeobachteten Moment durch einfaches Ziehen am Gurt sich aus dem Gurt befreien kann.

Aus der US 2004/0041457 ist ein Rückhaltegurt bekannt, welcher sich zwar Platz sparend in der Griffstange eines Einkaufswagens befindet und bei Nichtgebrauch durch eine Feder wieder zurück in das Gehäuse gezogen wird.

Dieser Stand der Technik beseitigt den bei der US 3350136 bestehenden Nachteil des voluminösen Gehäuses für den Gurt, der Nachteil, dass der Gurt nur von der Federkraft gespannt wird und sich das Kind durch Ziehen am Gurt selbst befreien kann, bleibt bestehen.

Aus der DE 103 52 095 A1 ist ein federbelasteter Rückhaltegurt bekannt, der an der Fläche angebracht ist, auf welcher das Kind sitzt. Auch bei diesem Rückhaltegurt ist der Nachteil vorhanden, dass sich das Kind durch Ziehen am Gurt selbst befreien kann. Ein weiterer Nachteil liegt darin, dass der Rückhaltegurt in eine starre Platte integriert ist und nicht bei einem zusammenklappbaren Kinderwagen verwendet werden kann.

Aus der US 3294447 ist ein Rückhaltesystem für einen Fahrzeugsitz bekannt, bei welchem der Gurt über eine Seilzug Mechanik blockiert wird, wenn die am freien Ende des Gurtes angebrachte Schnalle in das Schloss eingeschoben wird. Nachteilig bei diesem Stand der Technik ist die voluminöse Gurtrolle, welche es nicht erlaubt die flache Rückhaltevorrichtung zu schaffen.

Aus der US 3248148 ist eine Rückhaltevorrichtung für einen Sitz bekannt, bei welcher der Gurt an der Seite des Sitzes auf einer Rolle aufgewickelt ist und der Gurt durch einen Kanal unter der Sitzfläche hindurch auf die andere Seite des Sitzes verläuft. Am Ende des Kanals befindet sich das freie Ende mit der Schnalle. Der Gurt wird von dort über den Körper der zu sichernden Person gezogen und auf der Seite des Sitzes an der sich die Rolle befindet wird die Schnalle eingesteckt. Nachteilig ist der unter der Sitzfläche verlaufende Kanal, der bei einen Einsatz bei einem Einkaufswagen sehr stört.
Ein weiteres Beispiel ist aus dem Patentdokument US 5 364 169 bekannt.

### Offenbarung der Erfindung

### Technische Aufgabe

Es ist Aufgabe der Erfindung eine flache Rückhaltevorrichtung für Kinder zu schaffen, welche ein sicheres Anschnallen eines Kindes gewährleistet, indem die Gurtlänge auf einfache Art und Weise an die individuelle Größe des Kindes anpassbar ist, beim Einstecken der und der Gurt nicht durch das Kind gelockert werden kann.

Eine weitere Aufgabe der Erfindung ist es Beschädigungen am Gurt und der Gurtschließe zu vermeiden. Für den Fall, dass der Rückhaltegurt an einem Einkaufswagen Verwendung findet, ist es auch Aufgabe der Erfindung zu vermeiden, dass durch das Verhaken des unbenutzten Gurtes oder der unbenutzten Gurtschließe an Teilen des eigenen, eines fremden Einkaufswagens oder am Gurtsystem selbst Schäden entstehen.

Eine weitere Aufgabe der Erfindung liegt darin, die Ausgestaltung der gesamten Rückhalteeinrichtung möglichst so zu gestalten, dass sie beim Zusammenklappen eines Kinderwagens, etwa einem so genannten "Buggy" nicht stört.

Die Rückhaltegurt- Anordnung soll zudem ergonometisch und komfortabel sein.

### Technische Lösung

Diese Aufgaben werden durch die Rückhaltegurteinrichtung mit den Merkmalen des kennzeichenden Teils des Anspruchs 1 gennanten Merkmalen gelöst.

In einer Weiterbildung der Erfindung ist es vorgesehen, dass der Gurt, nachdem die Gurtschließe in der Aufnahme eingerastet ist nicht mehr weiter aus dem Gehäuse herausziehbar ist, jedoch durch die Federkraft weiterhin in das Gehäuse gezogen wird. Hierdurch ergibt es sich, dass ein Gurt, der zunächst locker um das Kind gelegt wurde automatisch immer straff anliegt.

In einer Weiterbildung der Erfindung ist das Gehäuse und die im Gehäuse liegende Mechanik so ausgebildet, dass das Gehäuse und die im Gehäuse liegende Mechanik verformbar ist.

### Vorteilhafte Wirkungen

Durch die vorliegende Erfindung wird vorteilhaft erreicht, dass der Benutzer die Länge des Gurtes automatisch richtig einstellt und ein Kind die Länge des Gurtes nicht verstellen kann, insbesondere nicht in einem unbeaufsichtigten Moment den Gurt soweit lockern kann, dass es sich aus dem Gurt befreien kann.

Das flache, verformbare Gehäuse hat den Vorteil, dass es nicht wesentlich aufträgt und insbesondere beim Ineinander Stapeln von Einkaufswagen den Stapelabstand gegenüber einem Einkaufswagen ohne Rückhalteelement nicht vergrößert oder beim Zusammenklappen eines Kinderwagens nicht stört.

### Kurze Beschreibung der Zeichnungen

Nachfolgend wird die Erfindung anhand zweier möglichen Ausführungsbeispiele durch 4 Figuren beschrieben.

Es zeigen im Einzelnen:

Figur 1 in perspektivischer Darstellung den Sicherheitsgurt bei Nichtgebrauch.
Figur 2 in perspektivischer Darstellung den Sicherheitsgurt bei Gebrauch
Figur 3 in geschnittener Darstellung der Sicherheitsgurt
Figur 4 eine Weiterbildung der Erfindung mit flexiblem Gehäuse
Figur 5 und Figur 6 eine Detailansicht der inneren Mechanik.

Das Gehäuse 1 ist im wesentlichen flach ausgebildet. Es ist etwa so breit, wie ein durchschnittlicher Kinderrücken. Das Gehäuse 1 hat an einer Seite eine Mulde 2, in welcher die Gurtschnalle 3 Platz findet. Vom Gurt 4 ist nur ein kleines Stuck sichtbar, der übrige Teil des Gurtes 4 ist innerhalb des Gehäuses 1.

Auf der anderen, der Mulde 2 gegenüber liegenden Seite hat das Gehäuse 1 eine Aufnahme 5, in welche die Gurtschnalle 3 einrasten kann. In dieser Aufnahme 5 ist ein Steuerelement 6 sichtbar, welches mit einem im Inneren des Gehäuses (1) untergebrachten Mechanismus verbunden ist.

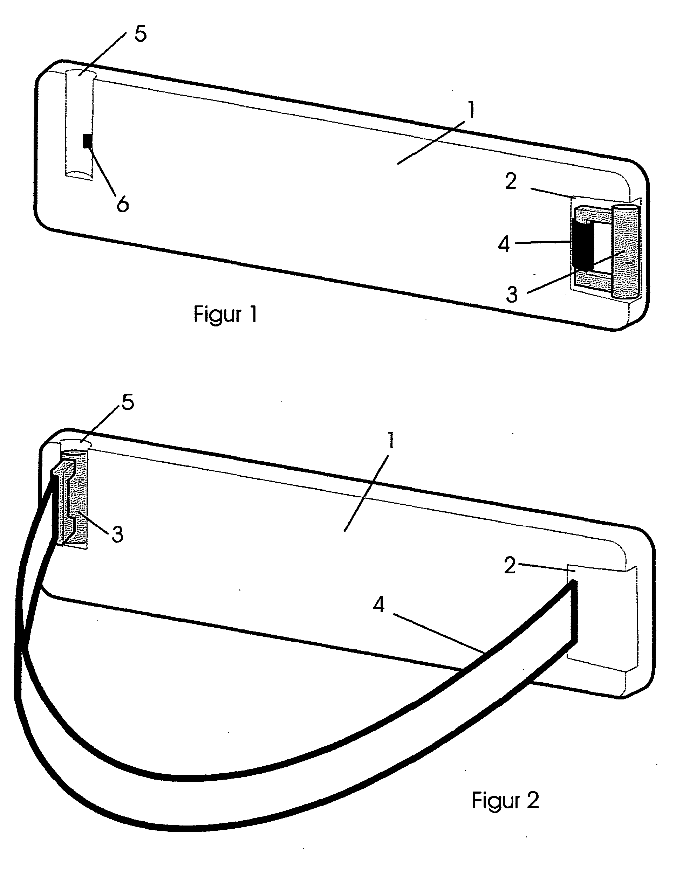

Die Figur 2 zeigt den Gurt 4 im ausgezogenen Zustand. Die Gurtschnalle ist in die Aufnahme 5 eingesteckt und darin eingerastet. Durch das Einrasten der Gurtschnalle 3 in der Aufnahme 5 wurde das Steuerelement 6 bewegt und über den im Gehäuse 1 untergebrachten Mechanismus erfolgt ein Blockieren des Gurtes 4.

Solange sich die Gurtschnalle 3 in der Aufnahme 5 befindet, bleibt das Steuerelement 6 in einer Position durch welche der Gurt 4 blockiert ist.

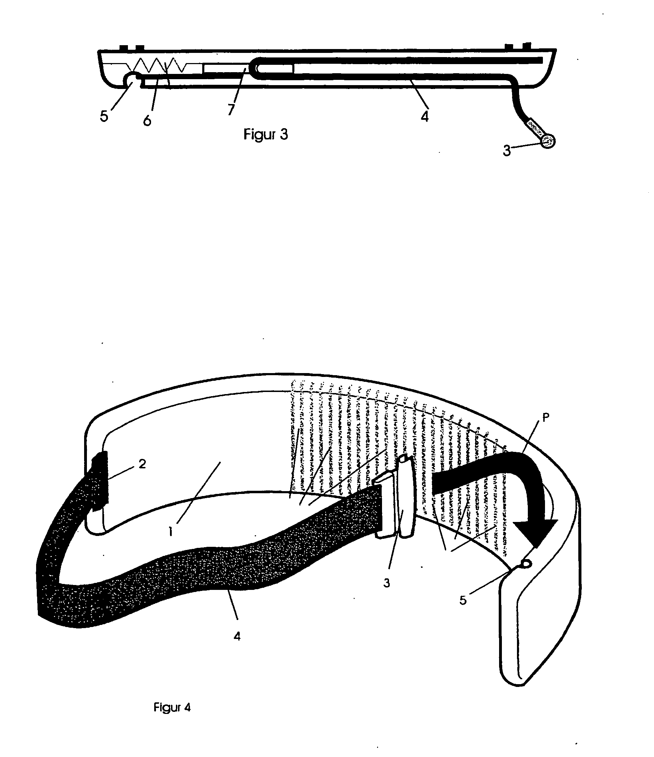

Die Figur 3 zeigt in geschnittener Darstellung das Innere des Gehäuses 1. Der Gurt 4 ist etwas herausgezogen. Der Gurt 4 verläuft in einer Schleife um ein Halteelement 7. So ist es möglich einen ausreichend langen Gurt 4 im Gehäuse 1 unterzubringen und das Gehäuse 1 gleichzeitig flach zu gestalten.

Eine Zugfeder ist am Halteelement 7 befestigt und zieht hierdurch den Gurt 4 in das Gehäuse. Beim Herausziehen des Gurtes 4 wird die Zugfeder gespannt.

Sofern ein besonders langer Gurt 4 im Gehäuse 1 untergebracht werden soll, ist es auch möglich mehr als eine Umlenkung und mehr als ein Halteelement 7 im Gehäuse 1 vorzusehen. über welche der Gurt 4 dann mäanderformig verläuft.

Die Umlenkung ist flach ausgebildet und trägt nicht auf.

Es kann hierdurch vorteilhaft auf eine voluminöse Rolle zum Aufwickeln des Gurtes 4 zu verzichtet werden.

Das Gehäuse 1 ist insgesamt flächig gestaltet, um dem Kind eine große Kontaktfläche zu bieten, wodurch unangenehme Druckstellen vermieden werden.

Das Gehäuse 1 ist mit üblichen Befestigungsmitteln, etwa Schrauben oder Klemmen am Kindersitz oder Einkaufswagen befestigbar.

Die Figur 4 zeigt eine Weiterbildung der Erfindung, bei welcher das Gehäuse 1 und die im Gehäuse 1 untergebrachte Mechanik verformbar ausgebildet ist. Diese : Weiterbildung ermöglicht den Einsatz der Erfindung auch dann, wenn eine starre Konstruktion störend ist, etwa bei einem zusammenklappbaren Kinderwagen, dem so genannten "Buggy".

In der gezeigten Darstellung ist der Gurt 4 herausgezogen. Im Bereich der gegenüberliegenden Seite des Gehäuses 1 befindet sich die Aufnahme 5, in welche die Gurtschnalle 3 einsteckbar ist.

Der Pfeil P gibt an, wie die am Ende des Gurtes 4 angebrachte Gurtschnalle 3 in die Aufnahme 5 einzuschieben ist. Das Blockieren des Gurtes 4 erfolgt auch bei dieser Ausgestaltung in der bereits beschriebenen Art und Weise.

Das Gehäuse 1 und die darin enthaltene Mechanik ist verformbar gestaltet. Im gezeigten Beispiel wird diese Verformbarkeit erreicht durch einen rippenartigen Bereich des Gehäuses 1.

Um die Verformung zu ermöglichen kann auch jede andere dem Fachmann geläufige Methode verwendet werden, etwa durch den Einsatz von Gelenken und/oder Dehnfugen.

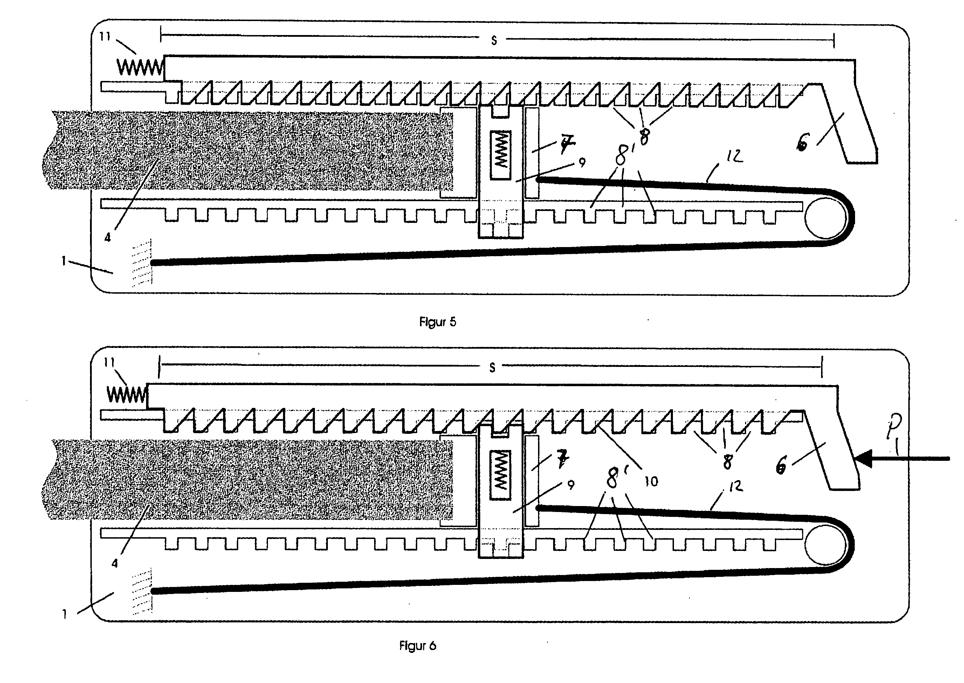

Die Figur 5 zeigt einen Blick in das Gehäuse 1. Der Gurt 4 steht in Verbindung mit dem schlittenartigen Halteelement 7, welches verschiebbar entlang der Verschiebstrecke s ist.

In der gezeigten Darstellung ist der Gurt 4 bereits etwas herausgezogen, weswegen sich das schlittenartige Haltelement 7 etwa in der Mitte der Verschiebstrecke s befindet. Beim Herausziehen wird ein elastisches Element 12 gedehnt, welches den Gurt 4 auch wieder zurück in das Gehäuse 1 zieht.

Am schlittenartigen Halteelement 7 ist federbelastet ein Fixierteil 9 vorgesehen. Dieses Fixierteil 9 kann in die Nuten 8 und 8', welche entlang der Verschiebestrecke s angeordnet sind eingreifen. In der Darstellung von Figur 5 ist der Eingang zu den beiden Reihen von Nuten 8 durch ein Steuerelement 6 blockiert.

Die Figur 6 zeigt die aus Figur 5 bekannte Situation, jedoch befindet sich das Steuerelement 6 nun in einer neuen, in Richtung des Pfeiles P versetzen Position, in welcher der Eingang zu den Nuten 8 und 8' frei ist. Dementsprechend greift das Fixierteil 9 nun in die Nuten 8 und 8' ein.

Das Steuerelement 6 nimmt diese Position solange ein, als sich die Gurtschnalle 3 des Gurtes 1 in der Aufnahme 5 befindet. Die Feder 11 ist hierbei komprimiert.

Nach dem Entfernen der Gurtschnalle 3 aus der Aufnahme 5 drückt die Feder 11 das Steuerelement 6 wieder zurück in die aus Figur 5 bekannte Position. Die schräge Kontur 10 am Steuerelement 6 wirkt hierbei auf das Fixierteil 9 und schiebt es aus den Nuten 8 und 8'. Das schlittenartige Halteelement 7 ist nun wieder entlang der Verschiebestrecke s bewegbar.

### Ausführungsform(en) der Erfindung

Die Erfindung ist nicht auf die beschriebenen Ausführungsformen beschränkt.

### Gewerbliche Anwendbarkeit

Die Erfindung ist gewerblich anwendbar im großen Produktfeld der Einkaufswagen, Kindersitze, Kinderwagen und zusammenlegbaren Kinderwagen.

## Patentansprüche

1. Rückhaltegurteinrichtung für Kinder mit einem Rückhaltegurt (4) und einem Gehäuse (1), wobei der Rückhaltegurt (4) gegen den Widerstand einer Federkraft aus einem Gehäuse (1) zu ziehen ist und bei Nichtgebrauch die Federkraft den Gurt (4) wieder zurück ins Gehäuse (1) zieht, wobei der Gurt (4) durch das Einrasten der Gurtschnalle (3) in einer Aufnahme (5) am Gehäuse (1) fixierbar ist und hierdurch nicht weiter aus dem Gehäuse (1) herausziehbar ist, wobei ein Halteelement (7) vorgesehen ist, welches mit dem Gurt (4) verbunden ist, das Halteelement (7) innerhalb des Gehäuses entlang einer verschiebstrecke (s) verschiebbar ist und Reihen von Nuten (8, 8') entlang der Verschiebestrecke (s) angeordnet sind, in welche ein Fixierteil (9) des Halteelements (7) in Abhängigkeit von Zustand eines Steuerelements (6) eingreifen kann,
**dadurch gekennzeichnet, dass**
das Steuerelement (6) die Öffnungen einer Reihe der Nuten (8) abdeckt, solange die Gurtschnalle (3) nicht in der Aufnahme (5) eingesteckt ist und dass die Öffnungen einer weiteren Reihe von Nuten (8') stets frei vom Steuerelement (6) sind.

2. Rückhaltegurteinrichtung für Kinder nach Anspruch 1
**dadurch gekennzeichnet, dass**
der Gurt (4) und die Gurtschnalle (3) bei Nichtgebrauch nicht über die Konturen des Gehäuses (1) herausragen.

3. Rückhaltegurteinrichtung für Kinder nach einem der Ansprüche 1 oder 2
**dadurch gekennzeichnet, dass**
der Gurt (4) im Inneren des Gehäuses (1) schleifen- oder mäanderformig verläuft.

4. Rückhaltegurteinrichtung für Kinder nach einem der Ansprüche 1 bis 3
**dadurch gekennzeichnet, dass**
nach dem Einrasten der Gurtschnalle (3) in einer Aufnahme (5) der Gurt (4) nicht weiter aus dem Gehäuse (1) herausziehbar ist, jedoch der Gurt (4) durch die Federkraft in das Gehäuse (1) zurückziehbar ist.

5. Rückhaltegurteinrichtung für Kinder nach einem der Ansprüche 1 bis 4
**dadurch gekennzeichnet, dass**
das Gehäuse (1) und eine im Inneren des Gehäuses (1) enthaltene Mechanik reversibel verformbar ist.

6. Rückhaltegurteinrichtung für Kinder nach einem der Ansprüche 1 bis 5
**dadurch gekennzeichnet, dass**
das entlang der Verschiebestrecke (s) eine weitere Reihe von Nuten (8') angeordnet ist, wobei das Fixierteil (9) in beide Reihe der Nuten (8, 8') eingreift, wenn das Steuerelement (6) die Öffnungen der einen Reihe der Nuten (8) freigibt.

7. Rückhaltegurteinrichtung für Kinder nach einem der Ansprüche 1 bis 6
**dadurch gekennzeichnet, dass**
das Halteelement (7) nicht entlang der Schiebestrecke (s) verschiebbar ist, solange die Fixierteile (9) in die Nuten (8, 8') eingreifen.

8. Rückhaltegurteinrichtung für Kinder nach einem der Ansprüche 1 bis 7
**dadurch gekennzeichnet, dass**
das Steuerelement (6) eine Kontur (10) aufweist, welche das Fixierteil (9) aus den Nuten (8, 8') bewegt, sobald die Gurtschnalle (3) aus der Aufnahme (5) entfernt wird.

9. Rückhaltegurteinrichtung für Kinder nach einem der Ansprüche 1 bis 8
**dadurch gekennzeichnet, dass**
der Gurt (4) in einer Schleife um das Halteelement (7) verläuft.

10. Rückhaltegurteinrichtung für Kinder nach einem der Ansprüche 1 bis 9
**dadurch gekennzeichnet, dass**
ein elastisches Element (12) am schlittenartigen Halteelement (7) befestigt ist und den Gurt (4) in das Gehäuse (1) zieht.

11. Rückhaltegurteinrichtung für Kinder nach einem der Ansprüche 10 bis 11
**dadurch gekennzeichnet, dass**
der Gurt (4) mäanderförmig über mehr als eine Umlenkung im Gehäuse (1) verläuft und mehr als ein schlittenartiges Halteelement (7), über welche der Gurt (4) mäanderformig verläuft, im Gehäuse (1) vorhanden ist.

## Claims

1. A restraint belt arrangement for children, with a restraint belt (4) and a housing (1), wherein the restraint belt (4) is to be drawn out of a housing (1) against the resistance of an elastic force, and when not in use, the elastic force draws the belt (4) back again into the housing (1), wherein the belt (4) is able to be fixed by the engaging of the belt clasp (3)in a mount (5) on the housing (1) and hereby is not able to be withdrawn further out from the housing (1), wherein a holding element (7) is provided, which is connected with the belt (4), the holding element (7) is displaceable within the housing along a displacement section (s), and rows of grooves (8, 8') are arranged along the displacement section (s), into which a fixing part (9) of the holding element (7) can engage as a function of the distance of a control element (6),
**characterized in that**
the control element (6) covers the openings of a row of the grooves (8), as long as the belt clasp (3) is not inserted in the mount (5) and that the openings of a further row of grooves (8') are always free from the control element (6).

2. The restraint belt arrangement for children, according to Claim 1,
**characterized in that**
the belt (4) and the belt clasp (3), when not in use, do not project over the contours of the housing (1).

3. The restraint belt arrangement for children, according to one of Claims 1 or 2,
**characterized in that**
the belt (4) runs in a loop- or meander shape within the housing (1).

4. The restraint belt arrangement for children, according to one of Claims 1 to 3,
**characterized in that**
after the engaging of the belt clasp (3) in a mount (5), the belt (4) is not able to be drawn out further from the housing (1), however, the belt (4) is able to be drawn back into the housing (1) by the elastic force.

5. The restraint belt arrangement for children, according to one of Claims 1 to 4,
**characterized in that**
the housing (1) and a mechanism contained within the housing (1) is reversibly deformable.

6. The restraint belt arrangement for children, according to one of Claims 1 to 5,
**characterized in that**
a further row of grooves (8') is arranged along the displacement section (s), wherein the fixing part (9) engages into both rows of the grooves (8, 8'), when the control element (6) frees the openings of the one row of the grooves (8).

7. The restraint belt arrangement for children, according to one of Claims 1 to 6,
**characterized in that**
the holding element (7) is not displaceable along the displacement section (s) as long as the fixing parts (9) engage into the grooves (8, 8').

8. The restraint belt arrangement for children, according to one of Claims 1 to 7,
**characterized in that**
the control element (6) has a contour (10) which moves the fixing part (9) out from the grooves (8, 8') as soon as the belt clasp (3) is removed from the mount (5).

9. The restraint belt arrangement for children, according to one of Claims 1 to 8,
**characterized in that**
the belt (4) runs in a loop around the holding element (7).

10. The restraint belt arrangement for children, according to one of Claims 1 to 9,
**characterized in that**
an elastic element (12) is fastened to the slide-like holding element (7) and draws the belt (4) into the housing (1).

11. The restraint belt arrangement for children, according to one of Claims 10 to 11,
**characterized in that**
the belt (4) runs in a meander shape over more than one change of direction in the housing (1) and more than one slide-like holding element (7), over which the belt (4) runs in a meander shape, is present in the housing (1).

## Revendications

1. Dispositif de sangle de maintien pour enfants comportant une sangle de maintien (4) et un logement (1), dans lequel la sangle de maintien (4) doit être déployée en sens opposé à la résistance d'une force de ressort hors d'un logement (1) et en cas de non utilisation la force de ressort rétracte à nouveau la sangle (4) à l'intérieur du logement (1), dans lequel la sangle (4) peut être fixée par encliquetage de la boucle de sangle (3) dans un réceptacle (5) sur le logement (1) et de cette manière ne peut plus être redéployée hors du logement (1), dans lequel un élément de retenue (7) peut être déplacé à l'intérieur du logement le long de la ligne de déplacement (s) et des rangées de rainures (8, 8') sont disposées le long de la ligne de déplacement (s), dans laquelle une pièce de fixation (9) de l'élément de retenue (7) peut s'engrener en fonction de l'état d'un élément de commande (6), **caractérisé en ce que** l'élément de commande (6) recouvre les ouvertures d'une rangée de rainures (8), tant que la boucle de sangle (3) n'est pas enfichée dans le réceptacle (5) et **en ce que** les ouvertures d'une autre rangée de rainures (8') sont constamment laissées à découvert par l'élément de commande (6).

2. Dispositif de sangle de maintien pour enfants selon la revendication 1, **caractérisé en ce que** la sangle (4) et la boucle de sangle (3) en cas de non utilisation ne dépassent pas au-dessus des contours du logement (1).

3. Dispositif de sangle de maintien pour enfants selon une des revendications 1 ou 2, **caractérisé en ce que** la sangle (4) s'étend en forme de boucle ou en forme de méandre à l'intérieur du logement (1).

4. Dispositif de sangle de maintien selon une des revendications 1 à 3, **caractérisé en ce que** après l'encliquetage de la boule de sangle (3) dans un réceptacle (5) la boucle (4) ne peut plus être déployée hors du logement (1), néanmoins la boucle (4) peut être rétractée dans la logement (1) par la force de ressort.

5. Dispositif de sangle de maintien pour enfants selon une des revendications 1 à 4, **caractérisé en ce que** le logement (1) et une mécanique contenue à l'intérieur du logement (1) peuvent être déformés de manière réversible.

6. Dispositif de sangle de maintien pour enfants selon une des revendications 1 à 5, **caractérisé en ce que** la long de la ligne de déplacement (s) une autre rangée de rainures (8') est disposée, dans lequel la pièce de fixation (9) s'engrène dans les deux rangées de rainures (8, 8'), quand l'élément de commande (6) met à découvert les ouvertures d'une des rangées de rainures (8).

7. Dispositif de sangle de maintien pour enfants selon une des revendications 1 à 6, **caractérisé en ce que** l'élément de retenue (7) n'est pas déplaçable le long de la ligne de déplacement (s), tant que les pièces de fixation (9) s'engrènent dans les rainures (8,8').

8. Dispositif de sangle de maintien pour enfants selon une des revendications 1 à 7, **caractérisé en ce que** l'élément de commande (6) présente un contour (10), qui déplace la pièce de fixation (9) hors des rainures (8, 8'), dès que la boucle de sangle (3) est éloignée du réceptacle (5).

9. Dispositif de sangle de maintien pour enfants selon une des revendications 1 à 8, **caractérisé en ce que** la sangle (4) s'étend dans une boucle autour de l'élément de retenue (7).

10. Dispositif de sangle de maintien pour enfants selon une des revendications 1 à 9, **caractérisé en ce que** un élément élastique (12) est fixé sur l'élément de retenue (7) du type chariot et tire la sangle (4) dans le logement (1).

11. Dispositif de sangle de maintien pour enfants selon une des revendications 10 à 11, **caractérisé en ce que** la sangle (4) s'étend en forme de méandre sur plus d'une déviation dans le logement (1) et plus d'un élément de retenue (7) du type chariot, par l'intermédiaire duquel la sangle (4) s'étend en forme de méandres, est prévu dans le logement (1).
